# EUROPEAN PATENT SPECIFICATION

(11) **EP 0 295 942 B1**
(45) Date of publication and mention of the grant of the patent: **06.04.1994**
(21) Application number: 88305557.6
(22) Date of filing: 17.06.1988
(51) Int. Cl.: G01N 15/10, G01N 27/60

(54) **On-column conductivity detector for microcolumn electrokinetic separations**
Leitfähigkeitsdetektor in einer Säule, zur elektrokinetischen Trennung in einer Mikrosäule
Détecteur à conductivité sur colonne, pour séparation électrocinétique en micro-colonne

(30) Priority: 17.06.1987 US 63547
(43) Date of publication of application: 21.12.1988
(73) Proprietor: THE BOARD OF TRUSTEES OF THE LELAND STANFORD JUNIOR UNIVERSITY, Stanford California 94305 (US)
(72) Inventor: Zare, Richard N., Stanford California 94305 (US); Huang, Xiao-Hua, Atherton California 94205 (US); Pang, Joseph, Palo Alto California 94301 (US)
(74) Representative: Goldin, Douglas Michael

(56) References cited:
- EP-A- 0 216 600
- DE-B- 1 598 930
- FR-A- 1 533 087
- US-A- 3 788 969
- US-A- 4 484 582
- ANALYTICAL CHEMISTRY vol. 56, 1984, pages 479-482, Washington, DC, USA; L.A. KNECHT et al.: "On-Column Electrochemical Detector with a Single Graphite Fiber Electrode for Open-Tubuar Liquid Chromatography"
- JOURNAL OF CHROMATOGRAPHIC SCIENCE vol. 23, May 1985, pages 186-191; R.L. ST. CLAIRE et al.: "Characterization of an On-Column Electrochemical Detector for Open-Tubular Liquid Chromatography"
- ANALYTICAL CHEMISTRY vol. 59, no. 23, December 1987, pages 2747-2749, Washington, DC, USA; X. HUANG et al.: "On-Column Conductivity Detector for Capillary Zone Electrophoresis"

## Description

### BACKGROUND OF THE INVENTION

### Field of the Invention

This invention is in the field of particle detectors. More particularly, it relates to a detector for detecting the electrokinetic passage of minute quantities of particles past a reference point in a microcolumn.

### Description of Background Materials

Several analytical methodologies have been developed in which a fluid sample is driven through a narrow bore microcolumn so as to separate and/or isolate the various particles and species contained within the fluid sample on the basis of size, shape, charge, viscosity, mobility, polarity, solvent-solute interreaction, or the like. Two of these methodologies based on packed columns are isotachophoresis and high performance liquid chromatography. Another process of growing importance is electrokinetic separation (also commonly referred to as open tubular electrophoresis separation or capillary zone electrophoresis separation).

With electrokinetic separation, as with any separation process, it is necessary to have a means to detect the passage of particles or species through the column and/or the arrival of particles or species at a set location in the column after the separation has taken place. A wide range of detectors are known based on any one of many changes in properties which may occur as the particles or species pass the detection zone. These can include, for example, a change in optical properties (e.g. U.V., visible or I.R. based detectors as well as refractive index detectors), a change in electrical properties (e.g. conductance or resistance-based detectors), or a change arising from an electrochemical reaction ( e.g. amperometric, coulometric, or potentiometric detectors).

The present invention relates to an improved electrical detector for use with microcolumn electrokinetic separation systems. Electrical detectors can be distinguished from electrochemical detectors. Electrochemical detectors involve electric effects due to chemical changes which occur when a particle or species enters the detection zone. Electrical detectors respond to changes in the conductance of current or changes of resistance which result when particles or species enter the detection zone. With electrical detectors no chemical reaction is necessarily associated or required.

With any microcolumn electrokinetic separation process and any of these detector methodologies, there is an interest in increasing the sensitivity. This can lead to smaller sample sizes being used or to detection of smaller trace components in the samples.

A number of workers have proposed a variety of small volume high sensitivity detectors for use on various types of columns. For example, Jorgenson, et al. (Knecht, L.A., Guthrie, E.J., and Jorgenson, J.W. Anal. Chem., 1984, 56, 479-82; St. Claire, R.L., III, and Jorgenson, J.W. J. Chromatogr. Sci., 1985, 23, 186-91) built an on-column electrochemical detector for a 15 µm internal diameter open tubular column. In this system the working electrode was a 5 µm or 9 µm carbon fiber that was inserted with a micropositioner into the end of the capillary. Adler, et al. (Adler, J.F., Fielden, P.R., and Clark, A.J. Anal. Chem., 1984, 56, 985-988) described a combination conductivity/permittivity detector. This detector provided simultaneous measurements of these two properties within a single cell. The detector was applied to ion chromatography systems. A detection limit of 40 ppb of chloride was reported. This system employed a pair of conical electrodes as its detection cell. Doury-Berthod, et al. (Doury-Berthod, M., Giampoli, P., Pitsch, H., Sella, C., and Poitrenaud, C. Anal. Chem., 1985, 57, 2257-2263) presented a theoretical description of dual column chromatography with conductivity detection. Their analytical response appears to be the sum of the conductometric contribution of the solute and the eluant. Kaniansky, et al. (Kaniansky, D., Koval, M., and Stankoviansky, S. J. Chromatogr., 1983, 267, 67-73) use 0.01 mm Pt-Ir alloy wires as electrodes in isotachophoresis. The capillaries were as small as 0.1 mm and made of fluoropolymers (PTFE, FEP). The wires were heated and pushed through the walls of the capillary. T. Tsuda has also described the use of a commercial conductivity detector external to the capillary for analyzing small positively charged metal ions (Suzuken Memorial Foundation 3, 33 (1984)).

Several papers by Mikkers, et al. (Mikkers, F.E.P., Everaerts, F.M., and Peek, J.A.F., J. Chromatogr., 1979, 168, 317-332; Mikkers, F.E.P., Everaerts, F.M., and Verheggen, Th. P.E.M. J. Chromatogr. 1979, 169, 1-10; Mikkers, F.E.P., Everaerts, F.M., and Verheggen, Th. P.E.M. J.Chromatogr. 1979, 169, 11-20) all referenced conductivity detectors for isotachophoresis in capillary electrophoresis based on the work of Everaerts and colleagues (Everaerts, F.M., and Verheggen, Th. P.E.M. J. Chromatogr. 1972, 73, 193-210; Everaerts, F.M., and Verheggen, Th. P.E.M. J. Chromatogr., 1974, 91, 837-851; Everaerts, F.M., and Rommers, P.J. J. Chromatogr., 1974, 91, (809-818; Everaerts, F.M., Geurts, M., Mikkers, F.E.P., and Verheggen, Th. P.E.M. J. Chromatogr., 1976, 119, 129-155; Kaniansky, D., and Everaerts, F.M. J. Chromatogr., 1978, 148, 441-446; Everaerts, F.M., Beckers, J.L., and Verheggen, Th. P.E.M. "Isotachophoresis: Theory, Instrumentation and Applications", 1976, Elsevier, New York, p. 136). The Everaerts' device consists of glass or PTFE capillary tubing with an inside diameter of 0.4 to 0.6 mm and an outside diameter of 0.7-1 mm. Two blocks of capillary tubing have one of each of their ends fixed in a block so that the two blocks can be clamped together. Before clamping, two disks of insulating material 0.005 mm thick having platinum sputtered on both sides and separated from one another by a disk of plain insulating material are drilled to form a hole in their centers which matches the i.d. of the capillary. These disks are placed between the two blocks which are then clamped so that no leakage occurs.

Bocek et al. (Foret, F., Deml., M., Kahle, V., and Bocek, P., Electrophoresis 1986, 7, 430-432) developed a conductivity cell for capillary zone electrophoresis. They used capillaries of about 0.3 mm i.d. Platinum electrodes were molded into a polyester block containing a channel with a circular cross-section equal to the inside diameter of the capillary. Larger openings in the ends of the block made a tight fit with pieces of capillary inserted. In both the Everaerts and Bocek cells,it is important to note that the electrodes are outside the capillary and that the inside surface of the glass or PTFE tubing is not continuous. These discontinuities in the tubing surface can be of particular concern in column electrophoresis or isotachophoresis systems. In these systems substantial voltages are connected across the column. Any increase in column cross-sectional area or any discontinuity in the column surface can lead to disturbances in the flow. This can reduce the accuracy and reproducibility of results. This problem becomes especially acute as one attempts to use smaller and smaller cross-section columns and higher and higher driving voltages. Another problem arises when the cross-section increases at the detector because of dead or void volume which can diminish the sensitivity of the detector. For these reasons, we have found that it is most advantageous in these settings to present as continuous an internal surface as possible with no discontinuities or cross-section increase.

DE-B-1598930 (dated 1966) describes a cell detection system employing a solid detection electrode and a reference electrode that is particularly useful for "micro-chromatography". The specification does not suggest that such a system wherein the electrodes are positioned along the capillary base would be feasible for electrophoretic systems.

### STATEMENT OF THE INVENTION

An improved conductivity detector for microcolumn electrokinetic separation systems has now been found.

According to the invention there is provided an electrokinetic separation zone comprising a cylindrical column having an internal diameter of less than 500 µm and at least one on-column conductivity electrode which terminates flush with the internal wall of the column or extends through a lateral side of the column into the column channel and terminates within the column channel, and means for applying an effective electrokinetic potential along the column channel and through the separation zone.

The invention also provides a method of electrokinetic separation and detection which method comprises passing the sample to be separated under the influence of an applied effective electrokinetic potential along the column channel of an electrokinetic separation zone comprising a cylindrical column having an internal diameter of less than 500 µm and at least one pair of conductivity electrodes at least one of the electrodes being an on-column conductivity electrode which terminates flush with the internal wall of the column or extends through a lateral side of the column into the column channel and terminates within the column channel; the electrokinetic potential being applied along the column channel and through the separation zone; and detecting conductivity between each pair of on-column conductivity electrodes or a pair of conductivity electrodes, one of which is the on-column conductivity electrode.

This conductivity detector is characterized by being "on-column", that is, it is based on the column itself, said column having a largest internal cross-sectional dimension of 500 µm or less, preferably 200 µm or less and more preferably 100 µm or less, by comprising one or more sensing electrodes suitably having a largest cross-sectional dimension which is from 0.01 to 0.75 times the maximum internal dimension of the column with these electrodes being placed directly on the column either by being inserted through the wall of the column or by being affixed at and in contact with the exit end of the column into communication with the analyte stream while presenting a continuous wall surface and no increase in cross-sectional area to the fluid flow.

In one embodiment, this conductivity detector has a single on-column electrode, located at or immediately adjacent to the exit end of the column. In this embodiment the second electrode is provided by an electrical connection to the fluid outflow volume.

In a preferred embodiment, this conductivity detector has one or more pairs of on-column electrodes and these paired electrodes are located directly across from each other on the microcolumn, to minimize potential across the electrodes and concomitant electrochemical reactions.

In other aspects this invention provides improved separation systems employing these detectors in combination with electrokinetic separation systems.

The invention further provides a method of manufacturing an on-column conductivity detector for electrokinetic separation comprising the steps of
a) forming one or more access holes through a cylindrical column having an internal diameter of less than 500 µm, preferably less than 200 µm, and more preferably from 25 to 80 µm;
b) inserting an electrode into the or each hole formed; and
c) permanently sealing the or each electrode to the column, such that the or each electrode terminates flush with the wall of the column or extends through a lateral side of the column into the column channel and terminates within the column channel. This includes an improved method for fabricating several embodiments of such conductivity detectors by laser drilling the microcolumn to provide positioning for the sensing electrodes and to achieve the desired placement accuracy and alignment for the electrodes.

The conductivity detectors of this invention are extremely sensitive, being able to detect conductivity changing species in the analyte solution at concentrations of less than 10⁻⁷ moles per liter. They have very tiny detection volumes and this coupled with their minimal dead volumes and high sensitivities allow very small numbers of ions or other species to be detected.

### DETAILED DESCRIPTION OF THE INVENTION

### Brief Description of the Drawings

In this detailed description of the invention, reference will be made to the attached drawings, in which common parts have common reference numbers.

Figure 1 is a cross-sectional view of a liquid filled tube illustrating the process of electroosmotic pumping.

Figure 2 is a cross-sectional view of a liquid-filled tube illustrating the process of electrokinetic separation and the application of a detector of this invention to such a process.

Figure 3 is a cross-sectional view of a two-electrode conductivity-measuring detector of the present invention.

Figure 4 is an enlarged cross-section of the electrode area of the detector shown in Figure 3.

Figure 5 is a schematic block diagram of one type of apparatus for employing the two-electrode detector shown in Figures 3 and 4.

Figure 6 is an electrical schematic illustrating one form of meter circuit useful in measuring signals sent by the detectors of this invention.

Figure 7 corresponds to Figure 4 and is another enlarged cross-section of the electrode area of an alternative embodiment of the detector of this invention having but a single on-column electrode.

Figure 8 corresponds to Figure 5 and illustrates the use of the single electrode detector of Figure 7.

Figure 9 is a cross-sectional view of an alternative embodiment of the detector of this invention.

Figure 10 is a cross-sectional view of another alternative embodiment of the detector of this invention.

Figures 11, 12, 13a and 13b, and 14 are five representative electropherograms showing separations achieved and detected using the present invention.

### Description of Preferred Embodiments

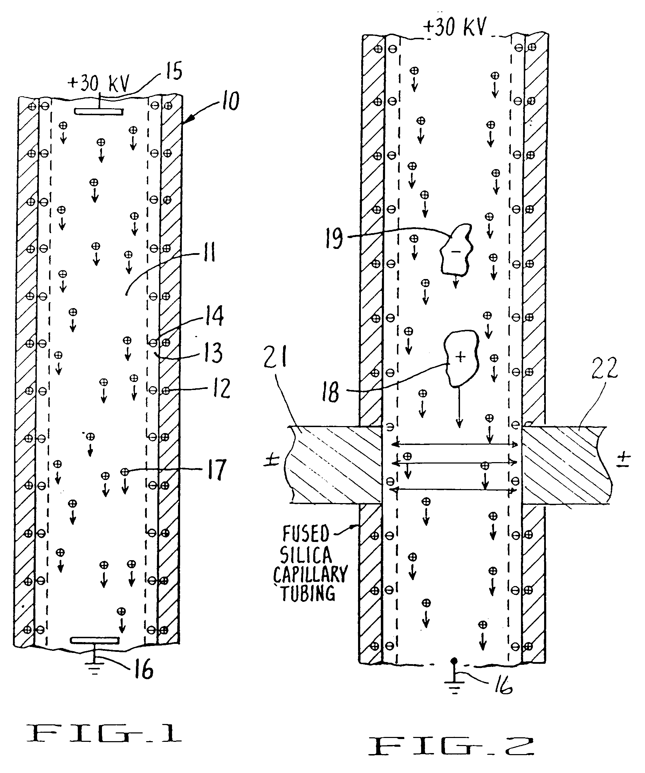

The present invention provides on-column conductivity detectors for use in microcolumn electrokinetic separation systems. The use of electroosmosis for pumping fluids was first described in 1974 by Pretorius, et al (J. Chromatogr., 99, 23). In this process there is flow of a liquid in contact with a solid surface under the influence of a tangentially applied electric field. The liquid flow is an electroosmotic flow that is attributed to the formation of an electric double layer at the solid/liquid interface, causing the overall liquid to be charged. This transport process can be visualized with reference to Figure 1. In Figure 1, a small bore double open-ended microcolumn or tube 10 is shown in cut away cross-section. The tube is filled with a conductive liquid 11 sometimes referred to herein as a "support electrolyte". The wall of tube 10 contains positive ions 12. (Depending upon the material of tube 10, the charge could be negative, instead.) Positive ions 12 attract anions 13 from conductive liquid 11 and set up an electric double layer 13. This preferential attraction of anions to the wall results in a net excess positive charge in the body of liquid 11. Thus, when an electric potential such as the 30 kV potential noted in Figure 1 is applied between electrodes 15 and 16, located at the ends of the column of liquid 11 contained within tube 10, the positively charged liquid moves toward the cathode.

The electrokinetic separation process relies upon the electroosmosis effect just described and upon the differential effect of the electric field on the motion of solutes or suspended particles in the liquid medium depending upon their positive, neutral or negative charge. These related effects may be visualized with reference to Figure 2. Figure 2 is a copy of Figure 1 but with various charged species 18 and 19 in liquid 11. Cationic species 18 is electrophoretically drawn toward cathode 16. Anionic species 19 is electrophoretically repelled by cathode 16. As is shown in Figure 2, and as is usually the case, the velocity of the liquid 11 is larger than the electrophoretic velocities of the species in solution such that all the species can be seen to move in the direction of the electroosmotic flow but at differing rates. As these species 18 and 19, or uncharged species as well, pass through, i.e. between, the detector made up of electrodes 21 and 22, they alter the conductivity properties measured across these two electrodes which depends upon the difference between the background and the sample.

Electrodes 21 and 22 have several characteristics which give rise to the high sensitivity of the present detectors. One characteristic is that the two electrodes are "on-column". That means that they are an integral part of the column rather than a separate detector unit. The second characteristic is that the two electrodes terminate at least flush with the walls of tube 10 so that a continuous internal surface is presented to the liquid 11 moving through the column. By "at least flush" is meant that the electrodes either are flush or extend into the liquid flow. They are not withdrawn from the flow. In Figure 2 the electrodes are flush with their ends, are cut flat, and are perpendicular to their axis. A third characteristic is that the two electrodes are placed on the same plane perpendicular to the axis of the microcolumn. This minimizes the potential between the electrodes due to the electrokinetic voltage applied to the column and thus minimizes electrochemical reactions at the electrodes. A fourth characteristic is that the microcolumn has an internal diameter or maximum cross-sectional dimension of less than 500 µm, preferably less than 200 µm and more preferably from about 25 µm about 80 µm and that the electrodes have a diameter equal to from 0.01 to 0.75, and especially from 0.01 to about 0.60 times this internal diameter or maximum cross-sectional dimension. These dimensions do not degrade the high resolution intrinsic to microcolumn electrokinetic separations. A fifth is that electrodes 21 and 22 are fabricated from a conductive material such as carbon or a metal inert under the conditions found in the electrolyte, e.g., platinum, platinum/irridium, gold, silver, stainless steel, and the like.

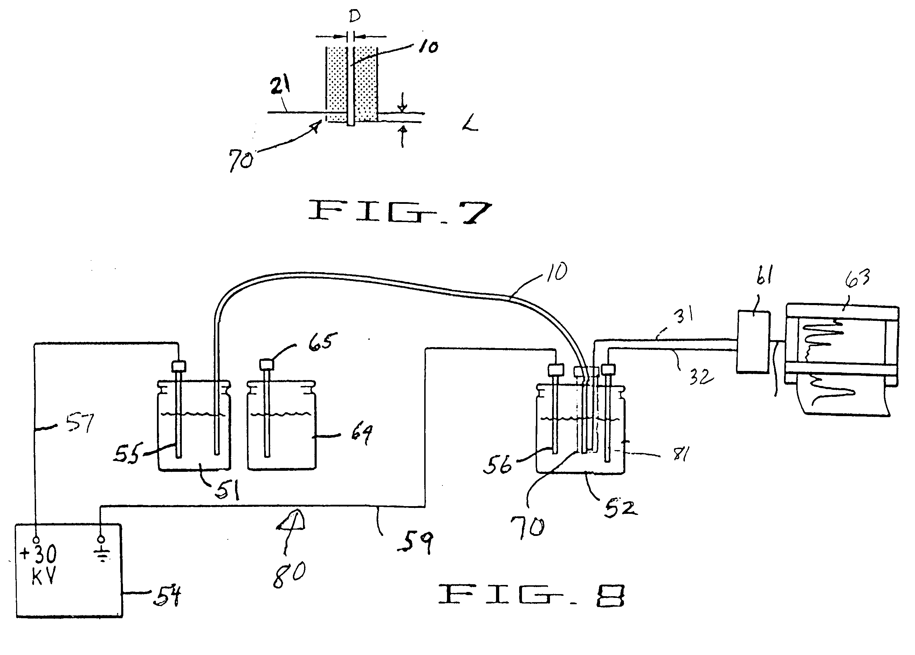

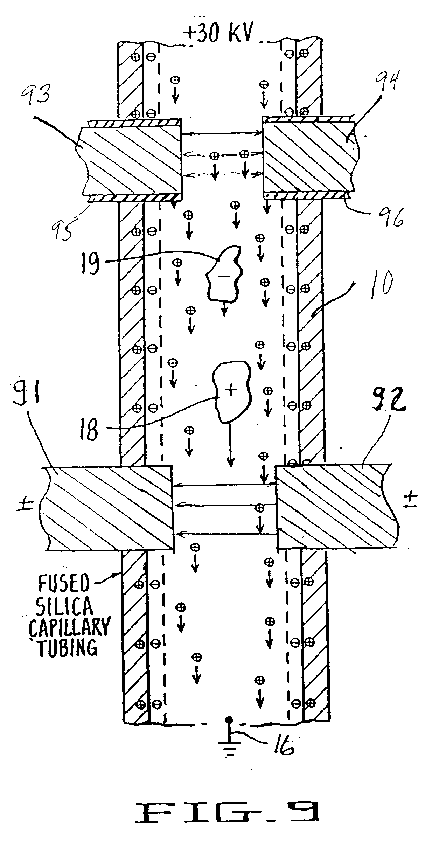

In an alternative embodiment of the detectors of this invention which will be described with reference to Figures 7 and 8, the detector can include one "on-column" electrode with the second electrode being provided by the fluid outflow container. In this embodiment, the single on-column electrode has all the characteristics just enumerated except, of course, for the requirement that it be diametrically opposed to the other electrode.

The placement of the electrodes in the detector through the wall of the column is a relatively precise matter. This can be accomplished by precisely drilling the access holes in column 10 such as with a laser drill, ion beam drill, electroerosion, chemical etching, or the like to a size adequate to accept the electrodes as well as minimal but adequate amounts of adhesive/sealant. Other hole-forming methods may be used such as HF etching (in the case of glass or other inorganic silicious columns) or other chemical etches for organic columns. In preferred embodiments, the access holes are drilled to a size from 5 to 25 µm larger in diameter than the diameter of the electrode being inserted and the electrodes are sealed into these holes. Epoxy resins, cyanoacrylate adhesives and like materials which are inert to the predominantly aqueous support liquids commonly employed and which give strong adherent bonds to the electrodes and to the column wall material are generally employed to seal the electrodes into their "on-column" position.

The sensing electrode of this invention is positioned on a microcolumn 10 at its far end, that is its end last traveled by the species being separated. This microcolumn 10 should be of a length that is effective to achieve the desired separation of species under the electrokinetic separation conditions employed. It will be appreciated that the longer the column the greater the time a sample will take to move through the column and the greater the distance that the various species will be separated from one another. In the case of electrokinetic separations, at the same time band broadening takes place so that resolution may not be improved by adding length. These factors suggest practical limits to the microcolumn length. For example, good results are achieved with column lengths as short as about 5 cm. Similarly, the transport time through a column often becomes inconveniently long for many routine analytical settings with column lengths longer than several meters. Generally, column lengths of from about 10 cm to about 200 cm, and especially from about 40 cm to 150 cm are preferred. Of course, longer and shorter columns, for example up to 4 or 5 meters or down to about 5 cm, can be employed in combination with the detectors of this invention. Because of their ease of construction, circular cross-section columns, i. e. "capillary tube type" columns, are preferred.

The microcolumn is constructed of a material that has the properties of being durable and retaining its physical integrity at the conditions of the electrokinetic separations. These properties include compatibility with the support electrolyte; substantial nonconductivity so as to conduct negligible electricity and to generate negligible heat as the electrokinetic potential is applied to it; and, being able to take on a positive or negative charge on its inner surface.

Inorganic materials such as quartz, glass, and fused silica and organic materials such as teflon (polytetrafluoroethylene and fluorinated ethylene/propylene polymers), polychloro-trifluoroethylene, aramide, nylon (polyamide), polyvinylchloride, polyvinylfluoride, polystyrene, polyethylene, polycarbonate, and the like may be employed.

As pointed out herein, electroosmotic flow is achieved when the inner surface of the microcolumn carries or adsorbs charged species. The inner surface of the microcolumn can be modified to vary its charge such as by contacting the surface with an acidic liquid so as to impart more positive charges, or by contacting the surface with a basic material so as to impart more negative charges or by contacting the surface with a silylating agent so as to reduce the number of charges. (See Analytical Chemistry, 53, No. 8, July 1981, 1298 for a description of the use of a trimethylsilane to reduce the charge density on the walls of a narrow channel electrophoresis zone and thus to vary the transport through the zone.) Other surface modification techniques that are known to the art may be used as well.

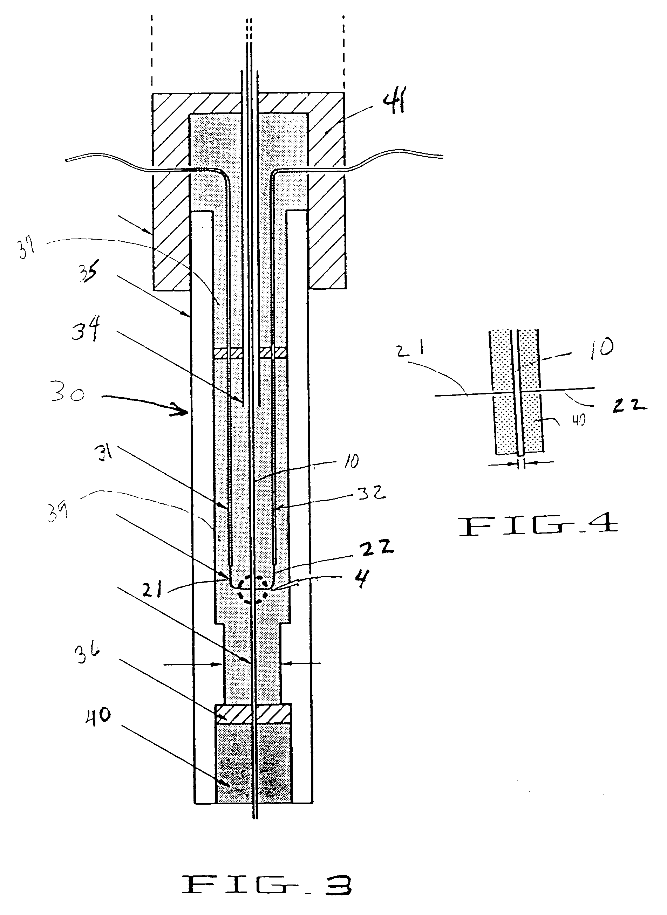

Turning now to Figures 3 and 4 in addition to Figure 2, Figures 3 and 4 illustrate that the detector of Figure 2 can be incorporated into a structural terminus 30 for microcolumn 10. In Figure 3, electrodes 21 and 22 are shown joined to connecting leads 31 and 32 for connection to the conductivity meter (not shown). Terminus 30 as shown in Figure 3 includes a number of additional components which are not necessary to the practice of the invention but lend structural strength to the terminus and illustrate an excellent mode for constructing a practical device for practicing the invention.

These components include a flexible support tube 34 which extends from the microcolumn terminus 30 to prevent breakage of the column. This tube typically is a plastic material such as teflon or the like. Supports 35 and 36 which center the tube during fabrication again us ally are of plastic. Terminus body parts 37, 39 and 40 are generally cast around the other terminus components to surround them and hold them rigid. Cap 41 is designed to position the terminus 30 in an electrophoretic or electrokinetic apparatus.

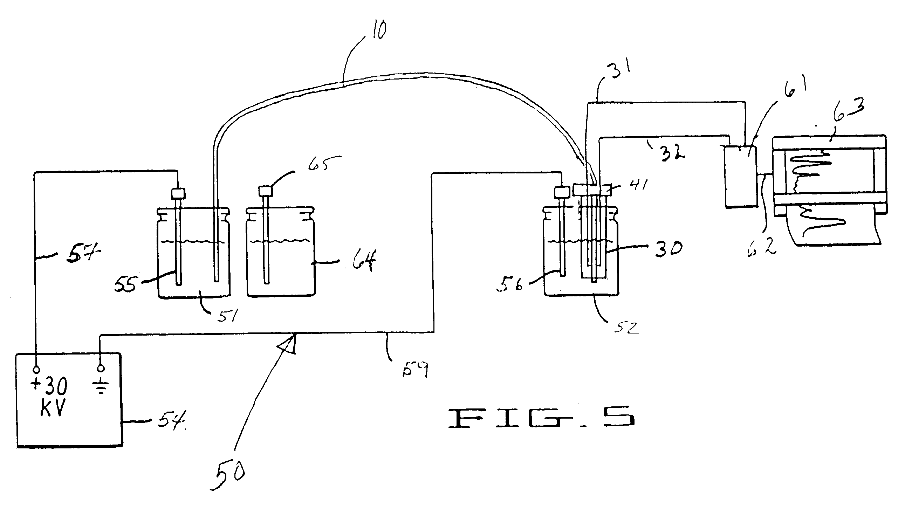

Such an apparatus is shown schematically in Figure 5. The apparatus includes a fused-silica capillary 10 which typically might have a 75 cm total length and a 50 µm inside diameter. The capillary is liquid-filled with a support electrolyte and terminated in terminus 30 containing a detector of this invention as shown in Figure 3. Feed container 51 and outflow container 52 contain support electrolyte as well, so that liquid-filled capillary 10 creates a continuous liquid and electrical connection between them. An effective electrokinetic voltage is applied from power supply 54 through conductors 57 and 59 and electrodes 55 and 56 contacting the electrolyte in containers 51 and 52 to yield a complete electrical circuit.

The voltage applied across the sample in column 10 by power supply 54 should be a voltage effective to cause discernable electrokinetic motion without excessive heating. Voltages below about 1000 volts are generally too low and voltages above about 100 kV are not commonly found in conventional high voltage power supplies. Based on these practical limits, voltages from about 3 kV to about 90 kV, and especially about 5 kV to about 60 kV, are preferred. The polarity of the electric potential determines the direction that the electrically charged species and charged support electrolyte move. It is generally preferred for safety reasons to have as much of the analysis system at ground potential as possible. In Figure 5, a 30 kV voltage is shown for illustration purposes. The inner surface of column 10 is such as to attract ions, for example negative ions (anions) and thus to cause formation of a diffuse double layer and in turn impart a net positive charge to the body of the support electrolyte in column 10. When the 30 kV potential is applied to the liquid in outflow container 51 by electrode 55, it can cause this positively charged liquid to be electroosmotically drawn from column 10 into container 52 and to draw additional electrolyte out of container 55 into column 10.

A typical current flow is 10-100 microA. In typical electrokinetic systems, the linear velocity of liquid through capillary 10 is about 0.2 to about 5 mm/second.

Capillary 10 passes through detector 30 which includes the two electrodes as shown in Figures 1 through 4. The output of detector 30 which varies as a function of the material driven between the two electrodes, is passed through leads 31 and 32 to conductivity meter 61, the output of which is fed through line 62 to a strip chart recorder 63. It will be appreciated that this output could be stored or otherwise processed such as in a computer.

In use, a sample is injected into capillary 10. This can be accomplished by mechanically or gravitationally injecting sample onto the column or by dipping the entrance end of capillary 10 into the liquid sample contained in container 64, connecting lead 57 to electrode 65 and turning on the high voltage for a short period, for example 5 to 10 seconds, at an electrokinetically effective voltage such as about 6 kV. This causes a defined 1 to 5 mm long "plug" of sample to be drawn into column 10. This sample is then subjected to the separative forces of electrokinesis by placing the entrance end in the support electrolyte in container 51, and creating the complete circuit through electrode 55 to separate the various species for detection in the detector of this invention.

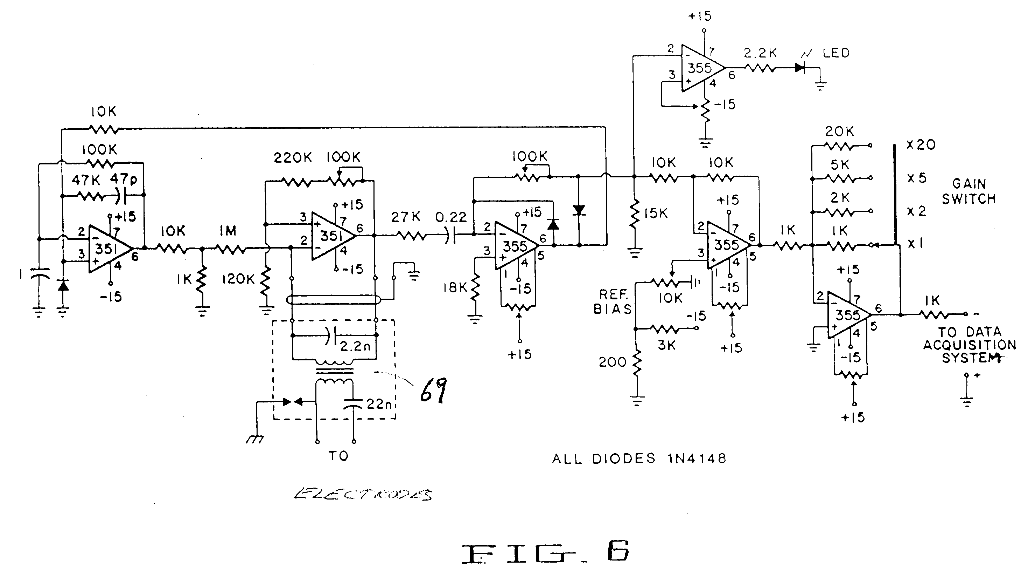

The conductance values measured by the detectors of this invention must be converted into a readable form arid displayed or otherwise used. Figure 6 is a schematic of one type of AC conductivity meter which can generate a readable conductivity signal when used with the electrodes. This meter circuit is a modification of the meter set out by Everaerts et al. in "Isotachophoresis..., supra, at 148. This circuit employs high impedance input ICs, LF351 and LF355. A transformer 69 is used as a galvanic insulator between the sensing electrodes, which are not shown and which have a high DC potential to ground, and the electronic circuit. The oscillation frequency is set to 3.5 kHz although other frequencies can be used as well. A low-pass filter is placed after the circuit to minimize electronic noise. The output of the conductivity meter is amplified (gain: 10 or 20) before being transmitted to a microcomputer for display either on a screen or on a hard printout device.

In an alternative embodiment, the detector of this invention has a single "on-column" electrode and relies upon electrical contact with the liquid in the outflow container to provide the second electrode. This embodiment is shown in Figures 7 and 8. Detector 70 of Figure 7 includes the microcolumn 10 as previously described with a single on-column electrode 21. This electrode is located very near the end of the column 10. Preferably, the distance L is similar to the largest dimension of the cross-section of the column, e.g. the diameter in the case of circular cross-section columns. It is preferred when L is 500 µm or less and more preferred when L is 300 µm or less. This minimizes the DC potential which will result on electrode 21 since this potential is a direct function of the distance L.

When detector 70 is included in an overall electrokinetic separation system, such as system 80 shown in Figure 8, the same setup described with reference to Figure 5 (and identified in Figure 8 accordingly) can be used with the exception that an additional electrode 81 is present. This electrode contacts the liquid in container 52. This liquid in turn contacts the open end of column 10 and thus creates a completed electrical circuit for the conductivity measurement. Alternatively, the second electrode could be achieved by connection to electrode 56. In this setup the detection event is when the particle or species enters the region of the column between the electrode 21 and the end of the column, that is when it is in the "L" region. Once the particle or species enters the gross volume of container 52 its presence is not detectable.

More than one pair of the sensing electrodes of this invention can be present on a given electrokinetic separation column. For example, two or more pairs of electrodes can be used. This can permit multiple readings to be taken as particles pass various points on the column. This can permit adjustments to be made on the detector circuits and the like to optimize detector performance. Multiple single electrodes could be used, if desired.

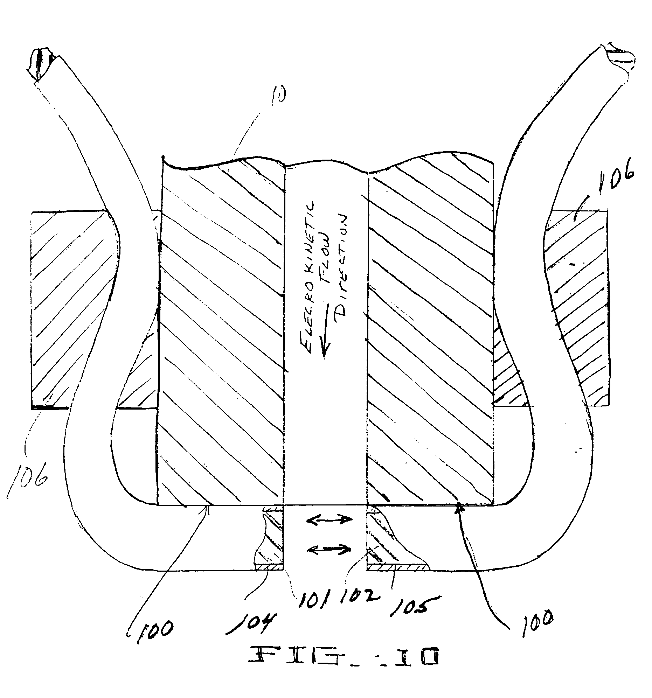

Turning to Figure 9, a column is shown having two pairs of on-column electrodes, 91 and 92 and 93 and 94. As previously noted, these electrodes are at least flush with the surface of tube 10. Electrodes 91 and 92 extend into the liquid flow and do not give rise to any dead volume in the column. Electrodes 93 and 94 are similar but carry an insulating coating 95 and 96 on their cylindrical surfaces so that only their ends contact the fluid and detect conductivity changes. This arrangement can give rise to very sensitive detection.

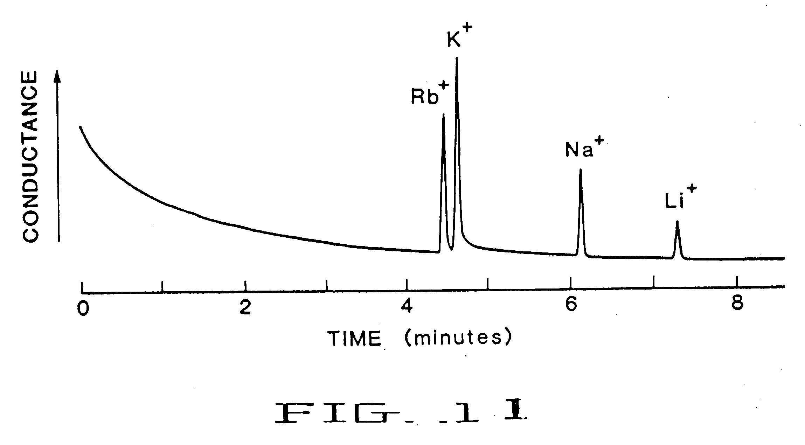

Turning to Figure 10, a column having a pair of on-column sensing electrodes 101 and 102 is there shown. Electrodes 101 and 102 are located contiguous with the exit end 100 of microcolumn 10 and are held in position there by molded adhesive band 106. Electrodes 101 and 102 are covered on their side surfaces with electrical insulators 104 and 105 so that conductivity is measured between their ends alone. This location of the on-column electrode contiguous with the end of the column has advantages of simple construction and durability.

### Applications of the Detectors

The detectors of this invention and the analysis systems which employ them can be used to detect charged and uncharged species and particles in solution. The liquid phase of the solutions is conductive and is an electroosmotically pumpable support liquid. A liquid is electroosmotically pumpable when it is an electrolyte, that is, when it contains or carries enough electrically charged species to conduct an electric current. Typical electroosmotically pumpable support liquids contain, for example, at least about 0.0005 moles per liter of ionic species and preferably from about 0.001 to about 10 moles per liter of ionic species. Such levels provide reasonable rates of electrokinetic transfer. Most commonly the support liquid is water-based or based on a mixed aqueous-organic liquid system. A mixed system can be useful to help solubilize or suspend organic target materials which have limited solubility in water alone. A neat organic liquid that is capable of conducting electricity can also be used. Representative materials for use in the support electrolyte include water and mixed solvents made up of water admixed with one or more water-miscible organic materials such as lower (e.g. 1 to 4 carbon atoms) alkanoic acids such as acetic acid, propionic acid, chloroacetic acid and the like; lower primary and secondary alkyl amines such as methyl amine, lower alcohols such as ethanol, methanol,and propanol; lower polyols such as the lower alkane diols; nitrogen containing liquids including acetonitrile, pyridine, piperidine and quinoline, lower ketones such as acetone and methyl ethyl ketone; lower alkyl amides such as DMF, N-methyl and N-ethyl formamide, N-ethyl acetamide and the like. With any of these liquids, the support liquid may contain added ionic materials such as salts, chelates and other complexes, acids, bases, buffers and the like. Surfactants, or other materials which promote micellularization can also be included. It is often preferred to use added ionic species which are zwitterions at the pH at which the liquid is passing through the electrokinetic channel. Representative materials include alkali metal and alkaline earth metal and transition metal salts of inorganic acids; similar salts of organic acids, ammonium and organic base salts of such acids; halogen acids, organic acids, and other acids; metal acids and hydroxides, amines and other bases, and the like. Typical zwitterions include amino acids and the Good's buffers marketed by Sigma Chemical Company, St. Louis, MO. These added ionic or ionizable materials may be selected from these broad classes generally at will so long as they are compatible with the other components of the sample and the support electrolyte as their primary function is to increase the conductivity of the support electrolyte.

The species or particles which are detectable with the detectors of this invention can be selected virtually without limitation from the materials which can be suspended or dissolved in the support liquid. These materials can include simple ions such as sodium, potassium, lithium, selenium, beryllium, copper, silver, iron, and magnesium ions; chloride, bromide, ammonium sulfate, nitrate, phosphate and the like up through much more complicated materials such as are often of biological or ecological or chemical interest.

The target species thus can be macromolecules such as polyamino acids, i.e., polypeptides and proteins, polysaccharides; nucleic acids and oligonucleotides such as RNA, DNA and DNA fragments, and combinations thereof. Such combinations of assemblages include bacteria, viruses, chromosomes, genes, mitochondria, nuclei, cell membranes, and the like.

The wide variety of proteins and polypeptides grouped according to similar structural features, proteins having particular biological functions, proteins related to specific microorganisms, particularly disease-causing microorganisms, etc.

The following are classes of proteins related by structure: protamines, histones, albumins, globulins, scleroproteins, phosphoproteins, mucoproteins, chromoproteins, lipoproteins, nucleoproteins, glycoproteins, proteoglycans, unclassified proteins, e.g., somatotropin, prolactin, insulin, and pepsin.

There are, of course, numerous potential target proteins found in the human plasma which are important clinically and include: prealbumin, albumin, a₁-lipoprotein, thyroxin-binding globulin, Gc-globulin (Gc 1-1, Gc 2-1, Gc 2-2), chlinesterase, myoblobin, transferrin, fibrinogen, immunoglobulin G (IgG), immunoglobulin A (IgA), immunoglobulin M (IgM), immunoglobulin E (IgE) or qE-globulin (qE), complement factors, blood clotting factors, peptide and protein hormones including, for example, parathyroid hormone (parathormone), insulin, glucagon, somatotropin (growth hormone), follicle-stimulating hormone, luteinizing hormone (interstitial cell-stimulating hormone), gonadotropin, secretin, and gastrin.

Other macromolecular target materials of interest are mucopolysaccharides and polysaccharides derived from or present in microorganisms such as coliform bacteria, salmonellae, shigellae, proteus species, pasteurellae, brucellae, aerobic spore-forming baccilli, anaerobic spore-forming bacilli, mycobacteria, actinomycetes (fungus-like bacteria), spirochetes, mycoplasmas, and the like.

Other target species can include: rickettsia (bacteria-like parasites), chlamydia, fungi, and viruses, including adenoviruses, pox viruses, myxoviruses, reoviruses Types 1-3, hepatitis viruses, and tumor viruses; drugs, metabolites, pesticides, pollutants, and the like. Included among them are the alkaloids such as morphine alkaloids (morphine, codeine, heroin, cocaine, benzoyl ecgonine, etc.), ergot alkaloids, steroid alkaloids, and the like. Other drugs of interest include steroids, which include the estrogens and androgens; andrenocortical steroids; bile acids; cardiotonic glycosides; and aglycones, which include digoxin and digoxigenin; the barbiturates, e.g., phenobarbital and secobarbital; aminoalkylbenzenes, which include the amphetamines; cannabinal and tetrahydrocannabinol, vitamins, prostaglandins, antibiotics, nucleosides and nucleotides.

Another group of target compounds includes amino acids and small peptides which include polyiodothyronines, e.g., thyroxine, and triiodothyronine, oxytocin, ACTH, angiotensin, met- and leu-inkephalin, their metabolites and derivatives.

The invention will be further illustrated by the following Examples. These are presented to exemplify methods of practicing this invention and are not to be construed as limiting its scope.

### EXAMPLES 1 AND 2

Two on-line conductivity cells were constructed by fixing platinum wires through diametrically opposite holes in 50 µm or 75 µm i.d. fused silica capillary tubing (Polymicro Technology, Inc., Phoenix, AZ and SGE, Austin, TX). These 40 µm i.d. holes were made with a computer-controlled CO₂ laser. Under a microscope, two 25 micrometer o.d. Pt wires (California Fine Wire Co., Grover City, CA) were placed in the holes exactly opposite to each other in order to minimize the potential difference between these electrodes when a high electrical field strength is applied. The wires were placed so as to give internal surfaces which were continuous. Liquified polyethylene glycol (PEG) (MW 1000, J.T. Baker Chemical Co.) was applied to the area surrounding the electrodes so that they were held temporarily in place. Once the PEG had solidified, it was carefully removed from the outside surface of the capillary. An epoxy (Miller Stephenson 907) was then used to seal permanently the electrodes in the capillary. Wires (#30 wire wrap, Digital Inc.) were soldered to the platinum electrodes and the entire conductivity cell was sealed in a plexiglass jacket. The completed structure of the conductivity cells corresponds to Figures 2-4.

The conductivity cells were then used to measure the conductivity of solutions as they were driven through an electrokinetic separation zone as shown in Figure 5. An AC conductivity meter as shown in Figure 6 was used. The oscillation frequency was set to 3.5 kHz. A low-pass filter was placed after the circuit to minimize electronic noise. The output of the conductivity meter was amplified (gain: 10 or 20) before being transmitted to a data acquisition board (DT2801, Data Translation, Inc., Marlborough, MA) in an IBM XT microcomputer for display.

Samples were introduced either by electromigration for 5 seconds at 5 kV or by gravity flow for 30 seconds with one end of the capillary elevated 10 cm higher than the other. The estimated volume injected was about 10 nL for electromigration and about 5 nL for gravity injection. The capillary was washed with buffer after each run.

Samples containing ions were dissolved in a buffer solution consisting of 20 mM morpholinoethanesulfonic acid (MES) adjusted by histidine to pH 6.1. All chemicals were obtained from Sigma (St. Louis, MO) and used without further purification. Serum . samples were also tested. These were acquired from the Stanford University Medical Center and diluted, as needed, with buffer solution. The diluted serum samples were deproteinized with a filter membrane (Toya Soda, Japan) in a centrifuge.

### RESULTS AND DISCUSSION

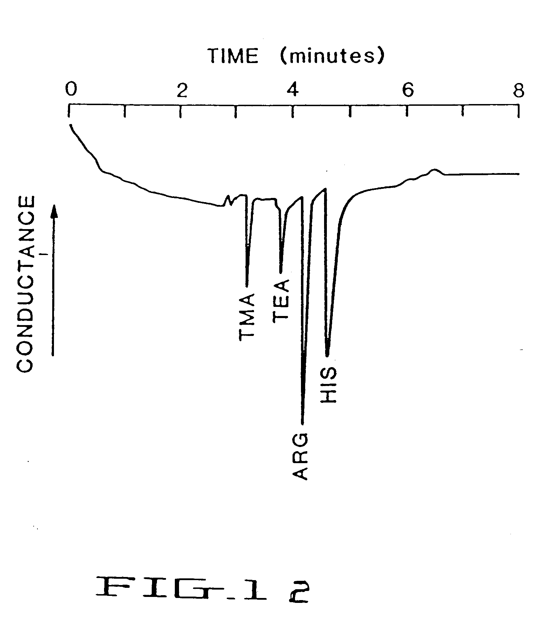

Figure 11 depicts the electrophoretic separation and detection of Rb+, K+, Na+, and Li+. The concentration of each ion is 2 x 10⁻⁵M. The signal-to-noise ratio, at this concentration, is 400. Based on a signal-to-noise ratio of 2, the detection limit is calculated to be about 10⁻⁷M for Li+. The effective detection volume is about 30 pL based on the determination of the cell constant (cross-sectional area of the electrodes divided by the distance between them) made by measuring the conductance of a known solution of KCl and using the literature value of the specific conductance for this solution. This volume estimate assumes that the electrodes are separated by 50 micrometers (the inside diameter of the capillary tube). The value obtained agrees within a factor of 1.5 with the geometrical volume based on the cross-sectional area of the electrodes and the distance between them. This implies that the actual amount detectable is 10⁻¹⁸ moles, which corresponds to about 10⁶ ions. The retention time of each ion is approximately proportional to the reciprocal of its mobility. All of the peaks shown in Figure 11 are "positive", i.e., when each of these ions passes the detection electrodes, their conductivities are greater than the background conductivity of the buffer solution and show up as positive deviations above the baseline. Thus, the areas of the peaks represent the mobility differences between the ions in the detection zone and the counter ion (histidine) of the electrolyte. It is also possible to observe "negative" peaks, which are negative deviations from the base line. These occur when a species with less conductivity than the background passes by the sensing electrodes.

Peak area is linearly related to ion concentration. A correlation-regression analysis was done on 18 concentration levels of Li+ extending over 3 orders of magnitude from 0.0025 mM to 2.0 mM. Three consecutive runs were made at each concentration level. The peak areas of Li+ were found to be linear over the entire range examined with a correlation coefficient of 0.993. Similar results were obtained for Na+.

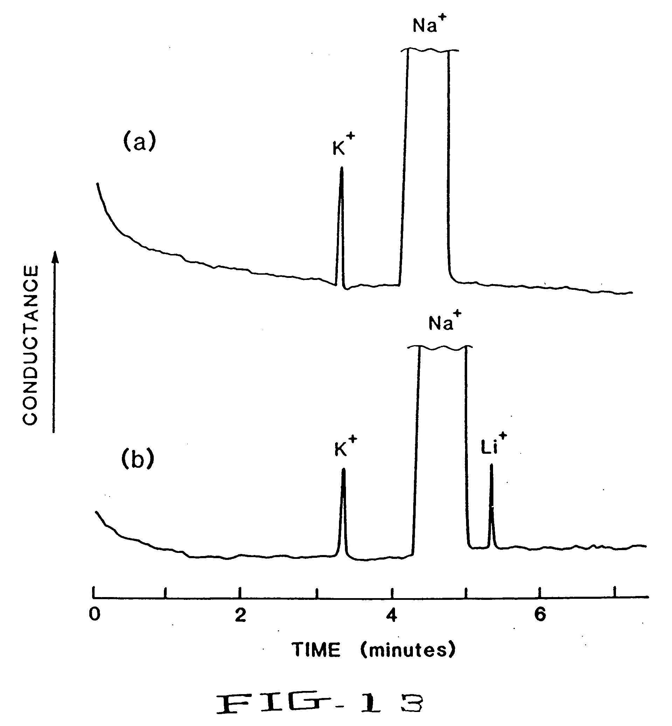

An electropherogram showing the separation of tetramethyl ammonium, triethyl amine, arginine, and histidine is shown in Figure 12. Since the K+, used as the counter ion in the buffer, has a greater mobility than the sample components, the peaks are "negative", i.e., they project below the baseline. This data illustrates that this method can be used to separate some organic cations. By altering buffer conditions, organic anions can also be detected.

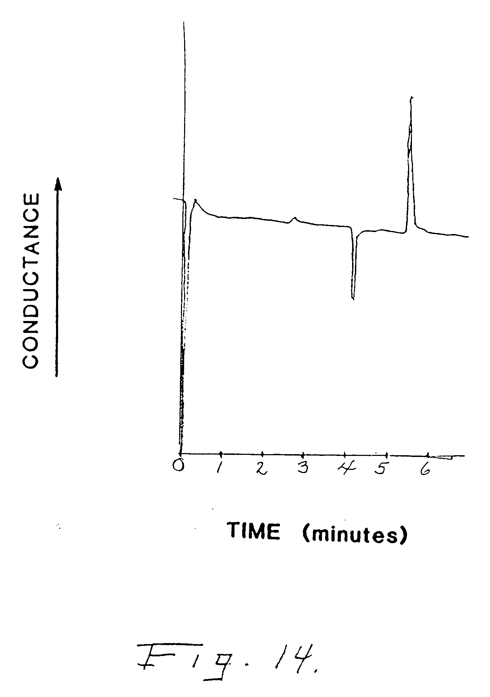

A normal human serum sample was similarly analyzed and the results are shown in Figure 13a. The first peak is K+, the very broad second peak is Na+. The peak clipping occurs due to saturation of the electronics because the Na+ concentration in serum is so high (about 140mM). As a result, Ca²+ and Mg²+, which have mobilities close to that of Na+, are obscured by the large Na+ peak. Figure 13b is an electropherogram of a serum sample from a patient on lithium therapy. It demonstrates that the third (Li+) peak is completely resolved from the Na+ peak. This suggests that this method may be useful in clinically monitoring patients taking lithium therapy.

This new conductivity detector has several advantageous characteristics. It permits control of the deviation. of the distance along the capillary between the electrodes to less than 10 micrometers. This means that the potential difference between the two electrodes can be minimized to less than 0.3 V in a 300 V/cm electric field. This feature eliminates almost completely any electrochemical reactions occurring at the electrodes. Another advantage of this structural form is that excellent resolution is made possible by the very small cross-sectional area of the electrodes. There is essentially no dead volume in the detector and the detection volume is very tiny. This system can be used not only for the detection of charged particles, but can also detect any neutral substances that can be separated electrophoretically. Since the conductivity change is an electrical signal, it is easily coupled to a data acquisition system. The apparatus is economical in terms of both cost and energy. The cost for all of the materials necessary for the construction of the conductivity cell and its associated circuitry is very modest, and the power required is only a few watts which could be furnished by a battery system. Hence, the entire system is readily made portable. Indeed, its small size suggests that it can be readily adapted to in vivo sampling. The sensitivity of this detector is quite remarkable for a non-optical system.

### EXAMPLE 3

A capillary zone electrophoretic separation run was carried out using the detector of Figures 7 and 8 having a single electrode within the capillary tube and the other electrode outside the capillary tube. A 75 µm i.d., 73.5 cm long fused silica capillary was used. The on-column electrode was about 150 µm from the out end of the capillary. The sample included the amino acid, arginine at a concentration of 5 x 10⁻⁴ M in 10 mM HEPES (N-2-hydroxyethylpiperazine-N'-2-ethanesulfonic acid) buffer, pH 7.5. Electrokinetic injection was used to introduce the sample into the capillary tube. Injection was made at 5 kV for 5 seconds. The separation run was made using 24 kV and 3 microamps.

The results of this experiment are shown in Figure 14, a recorder chart curve showing the conductivity changes detected by the detector of the invention. The sample was injected at about time=0. The negative peak at time=4.2 minutes is the neutral origin while the positive peak at 5.5 minutes is chloride ion.

## Claims

1. An electrokinetic separation zone comprising a cylindrical column having an internal diameter of less than 500µm and at least one on-column conductivity electrode which terminates flush with the internal wall of the column or extends through a lateral side of the column into the column channel and terminates within the column channel, and means for applying an effective electrokinetic potential along the column channel and through the separation zone.

2. An electrokinetic separation zone according to claim 1 comprising at least one pair of conductivity electrodes, at least one of the electrodes being an on-column electrode which terminates flush with the internal wall of the column or extends through a lateral side of the column into the column channel and terminates within the column channel.

3. An electrokinetic separation zone according to claim 1 or 2 wherein the column has an internal diameter of 25 to 200 µm.

4. An electrokinetic separation zone according to any preceding claim, wherein each on-column electrode has a diameter equal to 0.01 to 0.75 times the largest internal diameter of the column.

5. An electrokinetic separation zone according to any preceding claim wherein the on-column electrode(s) is (are) located within 500 µm of the exit end of the column.

6. An electrokinetic separation zone according to any preceding claim wherein the means for applying an effective electrokinetic potential are capable of applying a potential of between 3 kV to 90 kV.

7. An electrokinetic separation zone according to any preceding claim comprising a pair of on-column conductivity electrodes.

8. An electrokinetic separation zone according to claim 7 wherein the pair of electrodes are on a single plane perpendicular to the axis of the column.

9. An electrokinetic separation zone according to claim 7 or 8 wherein the pair of on-column electrodes are contiguous with the exit end of the column.

10. An electrokinetic separation zone according to any one of claims 1 to 6 comprising a plurality of pairs of on-column conductivity electrodes.

11. An electrokinetic separation zone according to claim 10 wherein one of the pairs of on-column electrodes is contiguous with the exit end of the column.

12. An electrokinetic separation zone according to claim 10 or 11 wherein each individual pair of on-column conductivity electrodes is arranged along the axis of the column with the members of each pair being in a single plane perpendicular to the axis of the column.

13. An electrokinetic separation zone according to any one of claims 1 to 6 comprising a single on-column conductivity electrode.

14. An electrokinetic separation zone according to claim 13 wherein the single on-column electrode is contiguous with the exit end of the column.

15. An electrokinetic separation zone according to any preceding claim wherein each on-column electrode passes through the column wall.

16. An electrokinetic separation zone according to any preceding claim wherein the on-column electrode terminates flush with the wall.

17. An electrokinetic separation zone according to any one of claims 1 to 15 wherein each on-column electrode extends through the wall and terminates within the interior of the column.

18. An electrokinetic separation zone according to claim 17 wherein each on-column electrode which extends through the wall is insulated on at least a portion of its side surface which extends into the interior of the column.

19. An electrokinetic separation zone according to any one of claims 1 to 18 wherein the column is quartz, glass, or fused silica.

20. A method of electrokinetic separation and detection which method comprises passing the sample to be separated under the influence of an applied effective electrokinetic potential along the column channel of an electrokinetic separation zone comprising a cylindrical column having an internal diameter of less than 500 µm and at least one pair of conductivity electrodes at least one of the electrodes being an on-column conductivity electrode which terminates flush with the internal wall of the column or extends through a lateral side of the column into the column channel and terminates within the column channel; the electrokinetic potential being applied along the column channel and through the separation zone; and detecting conductivity between each pair of on-column conductivity electrodes or a pair of conductivity electrodes, one of which is the on-column conductivity electrode.

21. A method according to claim 20, wherein the on-column electrode terminates flush with the wall.

22. A method of manufacturing an on-column conductivity detector for electrokinetic separation comprising the steps of
a) forming one or more access holes through a cylindrical column having an internal diameter of less than 500 µm, preferably less than 200 µm, and more preferably from 25 to 80 µm;
b) inserting an electrode into the or each hole formed; and
c) permanently sealing the or each electrode to the column, such that the or each electrode terminates flush with the wall of the column or extends through a lateral side of the column into the column channel and terminates within the column channel.

23. A method according to claim 22 wherein the column is of fused silica and the access holes are formed with a laser drill.

24. A method according to claim 22 wherein the access holes are formed by laser drilling, ion beam drilling, electroerosion or chemical etching.

25. A method according to any one of claims 22 to 24 wherein the electrodes have a diameter equal to 0.01 to 0.75, preferably from 0.01 to 0.60, times the inner diameter of the column and wherein the access holes are formed to a size from 5 to 25 µm in diameter larger than the diameter of the electrode being inserted therein.

## Patentansprüche

1. Elektrokinetische Trennzone umfassend eine zylindrische Säule mit einem Innendurchmesser von weniger als 500 µm und mindestens eine an der Säule angebrachte Leitfähigkeitsmeßelektrode, die bündig mit der Innenwand der Säule abschließt oder sich durch eine Seitenwand der Säule in den Säulenkanal erstreckt und im Inneren des Säulenkanals endet, und eine Einrichtung zum Anlegen eines wirksamen elektrokinetischen Potentials entlang des Säulenkanals und durch die Trennzone hindurch.

2. Elektrokinetische Trennzone nach Anspruch 1, umfassend mindestens ein Paar von Leitfähigkeitsmeßelektroden, wobei mindestens eine der Elektroden eine an der Säule angebrachte Elektrode ist, die bündig mit der Innenwand der Säule abschließt oder sich durch eine Seitenwand der Säule in den Säulenkanal erstreckt und im Inneren des Säulenkanals endet.

3. Elektrokinetische Trennzone nach Anspruch 1 oder 2, bei der die Säule einen Innendurchmesser von 25 bis 200 µm besitzt.

4. Elektrokinetische Trennzone nach einem der vorhergehenden Ansprüche, bei der jede an der Säule angebrachte Elektrode einen Durchmesser besitzt, der dem 0,01- bis 0,75fachen des größten Innendurchmessers der Säule entspricht.

5. Elektrokinetische Trennzone nach einem der vorhergehenden Ansprüche, bei der die an der Säule angebrachte(n) Elektrode(n) innerhalb von 500 µm des Austrittsendes der Säule angeordnet ist(sind).

6. Elektrokinetische Trennzone nach einem der vorhergehenden Ansprüche, bei der die Einrichtung zum Anlegen eines wirksamen elektrokinetischen Potentials in der Lage ist, ein Potential zwischen 3 kV und 90 kV anzulegen.

7. Elektrokinetische Trennzone nach einem der vorhergehenden Ansprüche, umfassend ein Paar an der Säule angebrachter Leitfähigkeitsmeßelektroden.

8. Elektrokinetische Trennzone nach Anspruch 7, bei der das Paar Elektroden auf einer einzigen Ebene senkrecht zur Achse der Säule angebracht ist.

9. Elektrokinetische Trennzone nach Anspruch 7 oder 8, bei der das Paar an der Säule angebrachter Elektroden an das Austrittsende der Säule angrenzt.

10. Elektrokinetische Trennzone nach einem der Ansprüche 1 bis 6, umfassend eine Vielzahl von Paaren von an der Säule angebrachten Leitfähigkeitsmeßelektroden.

11. Elektrokinetische Trennzone nach Anspruch 10, bei der eines der Paare von an der Säule angebrachten Elektroden an das Austrittsende der Säule angrenzt.

12. Elektrokinetische Trennzone nach Anspruch 10 oder 11, bei der jedes einzelne Paar von an der Säule angebrachten Leitfähigkeitsmeßelektroden längs der Achse der Säule angeordnet ist, wobei die Elemente von jedem Paar in einer einzigen Ebene senkrecht zur Achse der Säule liegen.

13. Elektrokinetische Trennzone nach einem der Ansprüche 1 bis 6, umfassend eine einzelne an der Säule angebrachte Leitfähigkeitsmeßelektrode.

14. Elektrokinetische Trennzone nach Anspruch 13, bei der die einzelne an der Säule angebrachte Elektrode an das Austrittsende der Säule angrenzt.

15. Elektrokinetische Trennzone nach einem der vorhergehenden Ansprüche, bei der jede an der Säule angebrachte Elektrode sich durch die Säulenwand erstreckt.

16. Elektrokinetische Trennzone nach einem der vorhergehenden Ansprüche, bei der die an der Säule angebrachte Elektrode bündig mit der Wand abschließt.

17. Elektrokinetische Trennzone nach einem der Ansprüche 1 bis 15, bei der sich jede an der Säule angebrachte Elektrode durch die Wand erstreckt und im Inneren der Säule endet.

18. Elektrokinetische Trennzone nach Anspruch 17, bei der jede an der Säule angebrachte Elektrode, die sich durch die Wand erstreckt, auf mindestens einem Abschnitt ihrer sich ins Innere der Säule erstreckenden Seitenfläche isoliert ist.

19. Elektrokinetische Trennzone nach einem der Ansprüche 1 bis 18, bei der die Säule aus Quarz, Glas oder Quarzglas besteht.

20. Verfahren zur elektrokinetischen Trennung und Messung, bei dem die zu trennende Probe unter dem Einfluß eines angelegten wirksamen elektrokinetischen Potentials entlang des Säulenkanals einer elektrokinetischen Trennzone geführt wird, die aus einer zylindrischen Säule mit einem Innendurchmesser von weniger als 500 µm und mindestens einem Paar von Leitfähigkeitsmeßelektroden besteht, wobei mindestens eine der Elektroden eine an der Säule angebrachte Leitfähigkeitsmeßelektrode ist, die bündig mit der Innenwand der Säule abschließt oder sich durch eine Seitenwand der Säule in den Säulenkanal erstreckt und im Inneren des Säulenkanals endet; wobei das elektrokinetische Potential längs des Säulenkanals und durch die Trennzone hindurch angelegt wird; und wobei die Leitfähigkeit zwischen jedem Paar von an der Säule angebrachten Leitfähigkeitsmeßelektroden oder zwischen einem Paar von Leitfähigkeitsmeßelektroden gemessen wird, von denen eine die an der Säule angebrachte Leitfähigkeitsmeßelektrode ist.

21. Verfahren nach Anspruch 20, bei dem die an der Säule angebrachte Elektrode bündig mit der Wand abschließt.

22. Verfahren zur Herstellung eines an der Säule angebrachten Leitfähigkeitsdetektors zur elektrokinetischen Trennung, umfassend die folgenden Schritte:
a) Herstellen von einer oder mehreren Zugangsbohrungen durch eine zylindrische Säule mit einem Innendurchmesser von weniger als 500 µm, vorzugsweise weniger als 200 µm, und noch mehr bevorzugt von 25 bis 80 µm;
b) Einsetzen einer Elektrode in die bzw. in jede hergestellte Bohrung; und
c) die bzw. jede Elektrode wird dauerhaft mit der Säule versiegelt, so daß die bzw. jede Elektrode bündig mit der Wand der Säule abschließt oder sich durch eine Seitenwand der Säule in den Säulenkanal erstreckt und im Inneren des Säulenkanals endet.

23. Verfahren nach Anspruch 22, bei dem die Säule aus Quarzglas besteht und die Zugangsbohrungen mit einem Laserbohrer hergestellt werden.

24. Verfahren nach Anspruch 22, bei dem die Zugangsbohrungen durch Laserbohren, Ionenstrahlbohren, Elektroerosion oder chemisches Ätzen hergestellt werden.

25. Verfahren nach einem der Ansprüche 22 bis 24, bei dem die Elektroden einen Durchmesser besitzen, der dem 0,01- bis 0,75fachen, vorzugsweise dem 0,01- bis 0,60fachen des Innendurchmessers der Säule entspricht, und bei dem die Zugangsbohrungen in einer Größe hergestellt werden, daß ihr Durchmesser um 5 bis 25 µm größer ist als der Durchmesser der darin eingesetzten Elektrode.

## Revendications

1. Zone de séparation électrocinétique comprenant une colonne cylindrique ayant un diamètre intérieur inférieur à 500 µm et au moins une électrode de conductivité sur colonne qui se termine au ras de la paroi interne de la colonne ou traverse un côté latéral de la colonne jusque dans le conduit de la colonne et se termine dans le conduit de la colonne, et un moyen pour appliquer un potentiel électrocinétique efficace le long du conduit de la colonne et à travers la zone de séparation.

2. Zone de séparation électrocinétique selon la revendication 1, comprenant au moins une paire d'électrodes de conductivité, au moins une des électrodes étant une électrode sur colonne qui se termine au ras de la paroi interne de la colonne ou traverse un côté latéral de la colonne jusque dans le conduit de la colonne et se termine dans le conduit de la colonne.

3. Zone de séparation électrocinétique selon la revendication 1 ou 2, dans laquelle la colonne a un diamètre intérieur de 25 à 200 µm.

4. Zone de séparation électrocinétique selon l'une quelconque des revendications précédentes, dans laquelle chaque électrode sur colonne a un diamètre compris entre 0,01 et 0,75 fois le plus grand diamètre intérieur de la colonne.

5. Zone de séparation électrocinétique selon l'une quelconque des revendications précédentes, dans laquelle la/les électrode(s) sur colonne se trouve(nt) à moins de 500 µm de l'extrémité de sortie de la colonne.

6. Zone de séparation électrocinétique selon l'une quelconque des revendications précédentes, dans laquelle les moyens pour appliquer un potentiel électrocinétique efficace sont aptes à appliquer un potentiel de 3 kV à 90 kV.

7. Zone de séparation électrocinétique selon l'une quelconque des revendications précédentes, comprenant une paire d'électrodes de conductivité sur colonne.

8. Zone de séparation électrocinétique selon la revendication 7, dans laquelle la paire d'électrodes sont dans un seul plan perpendiculaire à l'axe de la colonne.

9. Zone de séparation électrocinétique selon la revendication 7 ou 8, dans laquelle la paire d'électrodes sur colonne sont contiguës à l'extrémité de sortie de la colonne.

10. Zone de séparation électrocinétique selon l'une quelconque des revendications 1 à 6, comportant une pluralité de paires d'électrodes de conductivité sur colonne.

11. Zone de séparation électrocinétique selon la revendication 10, dans laquelle une des paires d'électrodes sur colonne est contiguë à l'extrémité de sortie de la colonne

12. Zone de séparation électrocinétique selon la revendication 10 ou 11, dans laquelle chaque paire individuelle d'électrodes de conductivité sur colonne est disposée le long de l'axe de la colonne, les éléments de chaque paire étant dans un seul plan perpendiculaire à l'axe de la colonne.

13. Zone de séparation électrocinétique selon l'une quelconque des revendications 1 à 6, comprenant une seule électrode de conductivité sur colonne.

14. Zone de séparation électrocinétique selon la revendication 13, dans laquelle l'électrode unique sur colonne est contiguë à l'extrémité de sortie de la colonne.

15. Zone de séparation électrocinétique selon l'une quelconque des revendications précédentes, dans laquelle chaque électrode sur colonne traverse la paroi de la colonne.

16. Zone de séparation électrocinétique selon l'une quelconque des revendications précédentes, dans laquelle l'électrode sur colonne se termine au ras de la paroi.

17. Zone de séparation électrocinétique selon l'une quelconque des revendications 1 à 15, dans laquelle chaque électrode sur colonne traverse la paroi et se termine dans l'espace intérieur de la colonne.

18. Zone de séparation électrocinétique selon la revendication 17, dans laquelle chaque électrode sur colonne qui traverse la paroi est isolée sur au moins une partie de sa surface latérale qui s'étend jusqu'à l'intérieur de la colonne.

19. Zone de séparation électrocinétique selon l'une quelconque des revendications 1 à 18, dans laquelle la colonne est en quartz, en verre ou en silice fondue.

20. Procédé de séparation et de détection électrocinétiques, lequel procédé comprend les étapes consistant à faire passer l'échantillon, destiné à être séparé sous l'effet de l'application d'un potentiel électrocinétique efficace, le long du conduit de colonne d'une zone de séparation électrocinétique comportant une colonne cylindrique ayant un diamètre intérieur inférieur à 500 µm et au moins une paire d'électrodes de conductivité, au moins une des électrodes étant une électrode de conductivité sur colonne qui se termine au ras de la paroi interne de la colonne ou traverse une paroi latérale de la colonne jusque dans le conduit de la colonne et se termine à l'intérieur du conduit de la colonne, le potentiel électrocinétique étant appliqué le long du conduit de la colonne et à travers la zone de séparation, et à détecter la conductivité entre chaque paire d'électrodes de conductivité sur colonne ou entre les électrodes d'une paire d'électrodes de conductivité, dont l'une est l'électrode de conductivité sur colonne.

21. Procédé selon la revendication 20, dans lequel l'électrode sur colonne se termine au ras de la paroi.

22. Procédé de fabrication d'un détecteur de conductivité sur colonne pour séparation électrocinétique, comprenant les étapes consistant à
a) former un ou plusieurs trous d'accès à travers une colonne cylindrique ayant un diamètre intérieur inférieur à 500 µm, de préférence inférieur à 200 µm, et de préférence encore compris entre 25 et 80 µm;
b) insérer une électrode dans le trou ou chaque trou formé; et
c) fixer d'une manière permanente l'électrode ou chaque électrode à la colonne, de façon que l'électrode ou chaque électrode se termine au ras de la paroi de la colonne ou traverse une paroi latérale de la colonne jusque dans le conduit de la colonne et se termine à l'intérieur du conduit de la colonne.

23. Procédé sein la revendication 22, dans lequel la colonne est en silice fondue et les trous d'accès sont formés à l'aide d'une perceuse à laser.

24. Procédé selon la revendication 22, dans lequel les trous d'accès sont formés par perçage laser, perçage par faisceau ionique, electro-érosion ou attaque chimique.

25. Procédé selon l'une quelconque des revendications 22 à 24, dans lequel les électrodes ont un diamètre compris entre 0,01 et 0,74, de préférence entre 0,01 et 0,60, fois le diamètre intérieur de la colonne et dans lequel les trous d'accès sont formés avec un diamètre supérieur de 5 à 25 µm au diamètre de l'électrode qui y est insérée.
